# EUROPÄISCHE PATENTSCHRIFT

(11) **EP 2 791 548 B1**
(45) Veröffentlichungstag und Bekanntmachung des Hinweises auf die Patenterteilung: **12.10.2016**
(21) Anmeldenummer: 12790515.6
(22) Anmeldetag: 15.11.2012
(51) Int. Cl.: F16H 37/04

(54) **DOPPELKUPPLUNGSGETRIEBE**
DOUBLE CLUTCH TRANSMISSION
BOÎTE DE VITESSES À DOUBLE EMBRAYAGE

(30) Priorität: 13.12.2011 DE 102011088396
(43) Veröffentlichungstag der Anmeldung: 22.10.2014
(73) Patentinhaber: ZF Friedrichshafen AG, 88046 Friedrichshafen (DE)
(72) Erfinder: LUEBKE, Eckhardt, 88048 Friedrichshafen (DE); KALTENBACH, Johannes, 88048 Friedrichshafen (DE); HUNOLD, Bernard, 88046 Friedrichshafen (DE)
(86) Internationale Anmeldenummer: PCT/EP2012/072660
(87) Internationale Veröffentlichungsnummer: WO 2013/087334

(56) Entgegenhaltungen:
- DE-A1-102005 044 068
- DE-A1-102007 021 990
- DE-A1-102007 040 449
- DE-A1-102007 047 671

## Beschreibung

Die Erfindung betrifft ein Doppelkupplungsgetriebe gemäß dem Oberbegriff des Patentanspruchs 1.

Doppelkupplungsgetriebe mit zwei Kupplungen, deren Eingangsseiten mit einer Antriebswelle und deren Ausgangsseiten mit jeweils einer von zwei koaxial zueinander angeordneten Getriebeeingangswellen verbunden sind, sind in verschiedenen Bauweisen bekannt. Dabei ist die eine Getriebeeingangswelle als eine äußere Hohlwelle ausgebildet, in der die andere, als Vollwelle ausgebildete Getriebeeingangswelle radial innen aufgenommen ist. Weiter ist es bekannt, bei einem solchen Doppelkupplungsgetriebe eine Abtriebswelle koaxial zur Antriebswelle anzuordnen und eine oder zwei Vorgelegewellen vorzusehen. Solche Doppelkupplungsgetriebe haben den Vorteil, dass sie bei einer sequenziellen Schaltabfolge grundsätzlich lastschaltbar sind, indem jeweils ein der einen Kupplung zugeordneter Gang aktiv ist, während ein der anderen Kupplung zugeordneter Anschlussgang vorgewählt ist, und der Gangwechsel durch ein zeitlich überschneidendes Öffnen und Schließen der beiden Kupplungen erfolgt. Dadurch ermöglichen Doppelkupplungsgetriebe weitgehend zugkraftunterbrechungsfreie Gangwechsel und bieten einen hohen Fahrkomfort.

Bekannt sind auch Doppelkupplungsgetriebe mit vorgeschalteten Splitgruppen und/ oder nachgeschalteten Bereichsgruppen, durch welche die Anzahl der vorhandenen Gänge des Hauptgetriebes vervielfacht werden kann. Diese Gruppengetriebekonzepte sind insbesondere für Nutzfahrzeuge sinnvoll, beispielsweise für Lastkraftwagen im Fernverkehr, die einerseits eine hohe Ganganzahl mit einer entsprechenden Getriebespreizung benötigen und andererseits einen hohen Fahrkomfort sowie eine hohe Betriebssicherheit bieten sollen. Allerdings sind bei derartig konzipierten Getrieben nicht alle Gänge lastschaltbar. Insbesondere dann, wenn die Bereichsgruppe wie üblich zwischen zwei Gangbereichen umschaltbar ausgebildet ist, sind zwar die meisten oder alle Gänge innerhalb der beiden Gangbereiche als Lastschaltgänge realisiert, der Umschaltvorgang der Bereichsgruppe selbst ist in der Regel jedoch nicht zugkraftunterstützt durchführbar. Da der Umschaltvorgang zudem vergleichsweise lange dauert, ergeben sich durch die Schaltung im Hauptgetriebe und die Bereichsumschaltung, einschließlich der notwendigen Synchronisierungen, bei den betreffenden Gangwechseln insgesamt lange zugkraftverminderte oder zugkraftunterbrochene Schaltphasen, die den Fahrkomfort merklich stören.

Aus der DE 10 2010 003 924 A1 ist ein Doppelkupplungsgetriebe mit zwei koaxial zueinander angeordneten Getriebeeingangswellen, einer koaxial und axial hinter den Eingangswellen angeordneten Hauptwelle, einer vorgeschalteten Splitgruppe sowie einer nachgeschalteten Bereichsgruppe bekannt. Zwei Vorgelegewellen sind bei diesem Getriebe achsparallel zueinander angeordnet. Die Bereichsgruppe ist als ein einfacher Planetenradsatz ausgebildet, bei dem das Sonnenrad mit dem ausgangsseitigen Ende der Hauptwelle verbunden ist, und der Planetenträger ausgangsseitig mit einer Abtriebswelle drehfest gekoppelt ist. Das Hohlrad ist zum Schalten einer unteren Ganggruppe mit einer kurzen Übersetzung ins Langsame an ein ortsfestes Bauteil koppelbar, und zum Schalten einer oberen Ganggruppe mit einer Direktübersetzung zwischen der Hauptwelle und der Abtriebswelle mit dem Planetenträger koppelbar. Eine radial innere der beiden Getriebeeingangswellen ist direkt mit dem eingangsseitigen Ende der Hauptwelle verbindbar. Auf der Hauptwelle ist zusätzlich eine Hohlwelle angeordnet, auf der zumindest ein Losrad eines Vorwärtsgangs drehbar gelagert ist, das durch ein Schaltelement mit der Hohlwelle drehfest verbindbar ist. Die Hohlwelle ist über Schaltelemente mit der Hauptwelle und/oder mit dem Planetenträger verbindbar. Die Gänge des bekannten Getriebes sind zumindest überwiegend lastschaltbar. Insbesondere ist durch die schaltbare Hohlwelle die Umschaltung der Bereichsgruppe ebenfalls lastschaltbar.

Aus der nicht vorveröffentlichten DE 10 2011 005 028 A1 ist ein Doppelkupplungsgetriebe mit zwei Kupplungen bekannt, deren Eingangsseiten mit einer Antriebswelle und deren Ausgangsseiten mit jeweils einer von zwei koaxial zueinander angeordneten Getriebeeingangswellen verbunden sind, und bei dem zwei koaxial zueinander angeordnete Vorgelegewellen sowie eine als Planetengetriebe ausgebildete Bereichsgruppe vorgesehen sind. Die beiden Vorgelegewellen sind als Hohlwelle bzw. als Vollwelle ausgebildet, und die Vollwelle ist radial innerhalb der hohlen Vorgelegewelle angeordnet. Die Kupplungen mit den Eingangswellen bilden jeweils ein Teilgetriebe mit mehreren schaltbaren Übersetzungsstufen. Die Übersetzungsstufen sind über die zugeordnete Vorgelegewelle des betreffenden Teilgetriebes und über eine mit einem Sonnenrad der Bereichsgruppe verbundene Hauptwelle mit einer Abtriebswelle koppelbar. Dabei ist die Abtriebswelle koaxial zu den beiden Getriebeeingangswellen angeordnet und mit einem Planetenträger der Bereichsgruppe verbunden. Der Planetenträger ist eingangsseitig mit einem nicht schaltbaren Losrad einer zu der Bereichsgruppe axial benachbarten Radebene verbunden. Das nicht schaltbare Losrad steht in Verzahnungseingriff mit einem schaltbaren Losrad, welches auf der radial inneren der beiden Vorgelegewellen angeordnet ist. Wenigstens eine Übersetzungsstufe ist dadurch unabhängig von der Bereichsgruppe mit der Abtriebswelle koppelbar. Dadurch ist ein Leistungspfad zum Abtrieb realisiert, der unabhängig von einer Bereichsschaltung ist, so dass sämtliche Vorwärtsgänge, insbesondere auch einer mit einer Bereichsumschaltung, bei einer sequenziellen Schaltfolge lastschaltbar sind. Dieses Doppelkupplungsgetriebe ermöglicht mit sieben Radebenen neun Vorwärtsgänge und zwei Rückwärtsgänge.

Aus der gattungsgemäßen DE 10 2007 047 671 A1 ist ein weiteres Doppelkupplungsgetriebe mit zwei Kupplungen bekannt, deren Eingangsseiten mit einer Antriebswelle und deren Ausgangsseiten mit jeweils einer von zwei koaxial zueinander angeordneten Getriebeeingangswellen verbunden sind. Das Doppelkupplungsgetriebe weist außerdem zwei koaxial zueinander angeordnete Vorgelegewellen sowie und eine als Planetengetriebe ausgebildete Bereichsgruppe auf. Die beiden Vorgelegewellen sind als Hohlwelle bzw. als Vollwelle ausgebildet, wobei die Hohlwelle auf der Vollwelle drehbar gelagert angeordnet ist. Über eine doppelseitig betätigbare Schaltvorrichtung ist wechselweise, je nach Schaltstellung der Schaltvorrichtung, entweder die äußere Vorgelegewelle mit der inneren Vorgelegewelle drehfest verbindbar oder ein Losrad mit der inneren Vorgelegewelle drehfest koppelbar. Ein Element der Hauptgruppe des Getriebes, vorzugsweise ein Gangrad, und ein Element der Bereichsgruppe des Getriebes, vorzugsweise ein Planetenträger, sind über eine Kopplungsvorrichtung miteinander verbindbar. Eine Abtriebswelle ist mit dem Planetenträger drehfest verbunden. Ein Gang einer unteren Ganggruppe der Bereichsgruppe und ein Gang einer oberen Ganggruppe der Bereichsgruppe können gleichzeitig gebildet werden, wobei die jeweiligen Schaltkupplungen geschlossen werden, die zugehörigen Lastschaltkupplungen bzw. Eingangskupplungen der Doppelkupplung jedoch noch geöffnet sind. Die beiden Getriebegänge aus der unteren und der oberen Ganggruppe können auch gleichzeitig geschaltet werden, wobei die Lastschaltkupplungen geschlossen werden und das Antriebsmoment über die Gänge parallel übertragen wird, wobei einer von beiden Gängen ausgewählt wird, der anschließend geschaltet bleibt, während der andere Getriebegang getrennt wird. Eine Umschaltung der Bereichsgruppe erfolgt dabei unter Last.

Ein vergleichbares Doppelkupplungsgetriebe, jedoch mit zwei achsparallelen Vorgelegewellen, ist auch aus der DE 10 2008 036 165 A1 bekannt.

Zwei weitere ähnliche Doppelkupplungsgetriebe, jedoch mit einer oder zwei axial hintereinander angeordneten Vorgelegewellen sind aus der US 7 621 839 B2 und der US 7 913 581 B2 bekannt.

Vor diesem Hintergrund liegt der Erfindung die Aufgabe zugrunde, ein Doppelkupplungsgetriebe mit einer Bereichsgruppe vorzuschlagen, dessen Vorwärtsgänge einschließlich einer Bereichsumschaltung sämtlich lastschaltbar sind, und dass einen im Verhältnis zur Ganganzahl geringen Bauteilaufwand erfordert sowie eine kompakte Bauform aufweist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Doppelkupplungsgetriebe mit einer Hauptgruppe und einer antriebstechnisch nachgeordneten Bereichsgruppe, diese Bereichsgruppe zwischen zwei Übersetzungsstufen, die einen unteren Gangbereich und einen oberen Gangbereich darstellen, ohne Zugkraftunterbrechung im Antriebsstrang umschaltbar ist, indem mittels einer Schaltvorrichtung ein Stützgang zwischen den beiden Gangbereichen realisiert wird, der die Bereichsgruppe zwischen der Hauptgruppe und dem Abtrieb des Getriebes überbrückt. Über schaltbare Wellenverbindungen und die Bereichsgruppe sollen in einer kompakten Getriebestruktur mit einer derart überbrückbaren Bereichsgruppe möglichst viele Gänge für ein lastschaltbares Fahrzeuggetriebe, beispielsweise für Nutzfahrzeuge, nutzbar werden.

Demnach geht die Erfindung aus von einem Doppelkupplungsgetriebe, mit zwei Kupplungen, deren Eingangsseiten mit einer Antriebswelle und deren Ausgangsseiten mit jeweils einer von zwei Getriebeeingangswellen verbunden sind, wobei eine Getriebeeingangswelle als radial innere Vollwelle ausgebildet ist, die in der axial kürzeren und als Hohlwelle ausgebildeten zweiten Getriebeeingangswellen drehbar aufgenommen ist, mit mindestens zwei Vorgelegewellen, von denen eine Vorgelegewelle als eine radial innere Vollwelle ausgebildet und in einer axial kürzeren äußeren Hohlwelle drehbar aufgenommen ist, mit einer koaxial hinter der Antriebswelle angeordneten Abtriebswelle, mit einer koaxial zwischen der inneren Getriebeeingangswelle und der Abtriebswelle angeordneten Hauptwelle, mit einer mehrstufigen Hauptgruppe, in der mehrere Vorwärtsgangradebenen vorhanden sind, mit einer der Hauptgruppe antriebstechnisch nachgeordneten mehrstufigen Bereichsgruppe, und mit mehreren Schaltelementen zum Schalten von Getriebeelementen und/ oder Getriebeelementverbindungen, bei dem ein erstes Getriebeelement der Hauptgruppe mit einem ersten Getriebeelement der Bereichsgruppe verbunden ist, und bei dem ein zweites Getriebeelement der Hauptgruppe mit einem zweiten Getriebeelement der Bereichsgruppe, welches mit der Abtriebswelle verbunden oder verbindbar ist, durch ein Schaltelement verbindbar ist.

Zur Lösung der gestellten Aufgabe sieht die Erfindung bei diesem Getriebe außerdem vor, dass auf der äußeren Vorgelegewelle zumindest drei Festräder angeordnet sind, die mit jeweils einem Losrad in Verzahnungseingriff sind, und dass die beiden Vorgelegewellen durch ein einseitig betätigbares Schaltelement drehfest miteinander verbindbar sind, wobei das zu diesem Schaltelement nahe Losrad auf der Hauptwelle drehbar gelagert und mit dieser drehfest verbindbar ist, wobei das zu diesem Schaltelement ferne Losrad auf der inneren Getriebeeingangswelle drehbar gelagert und mit dieser drehfest verbindbar ist, und dass ein mittleres Losrad axial zwischen den beiden genannten Losrädern drehbar angeordnet sowie mit der inneren Getriebeeingangswelle, mit der Hauptwelle oder mit diesen beiden Wellen drehfest verbindbar ist.

Die Erfindung beschreibt demnach einen Doppelkupplungsradsatz, der mit wenigen Bauteilen und Radebenen auskommt, wobei einschließlich einer Bereichsgruppenumschaltung alle Vorwärtsgänge bei einer sequenziellen Schaltfolge lastschaltbar sind. Komforteinbußen durch eine zugkraftunterbrochene Bereichsumschaltung mit einer langen Schaltzeit werden dadurch vorteilhaft vermieden. Die Anzahl der möglichen lastschaltbaren Vorwärtsgänge übersteigt die zweifache Anzahl der Vorwärtsgangradebenen der Hauptgruppe, ohne dass eine vorgeschaltete Splitgruppe oder eine zusätzliche Hohlwelle auf der Hauptwelle erforderlich wäre.

Eine besonders kompakte Bauform mit einer Vielzahl von Schaltmöglichkeiten wird bei dem Getriebe dadurch erreicht, dass eine der beiden Getriebeeingangswellen als eine radial innere Vollwelle ausgebildet ist und die andere Getriebeeingangswelle als eine axial kürzere äußere Hohlwelle ausgebildet ist, welche koaxial über der inneren Getriebeeingangswelle so angeordnet ist, dass die innere Getriebeeingangswelle beidseitig aus der äußeren Getriebeeingangswelle heraustritt. Außerdem ist hierzu vorgesehen, dass eine Hauptwelle vorhanden ist, die koaxial sowie axial zwischen der inneren Getriebeeingangswelle und der Abtriebswelle angeordnet ist. Weiter ist hierzu vorgesehen, dass eine der beiden Vorgelegewellen als eine radial innere Vollwelle ausgebildet ist und die andere Vorgelegewelle als eine axial kürzere äußere Hohlwelle ausgebildet ist, welche koaxial so über der inneren Vorgelegewelle angeordnet ist, dass die innere Vorgelegewelle beidseitig aus der äußeren, hohlen Vorgelegewelle heraustritt, und dass die beiden Vorgelegewellen über ein einseitig betätigbares Schaltelement miteinander koppelbar sind.

Diese Anordnung ermöglicht eine effektive Mehrfachnutzung der vorhandenen Schaltelemente, Gangräder und Wellenverbindungen. Auf beiden Vorgelegewellen können grundsätzlich jeweils mehrere Fest- und/oder Losräder angeordnet sein, wobei die als Hohlwelle ausgebildete Vorgelegewelle zumindest drei Festräder trägt. Vorzugsweise sind auf den beiden Vorgelegewellen nur Festräder angeordnet und außer der einseitigen Schaltvorrichtung zur Kopplung der beiden Vorgelegewellen alle Schaltelemente der Hauptgruppe auf der Getriebeeingangswelle und der Hauptwelle angeordnet. Die Anordnung der Vorgelegewellen koaxial übereinander begrenzt den radialen Durchmesser des Getriebes.

Durch die Erfindung wird ein Getriebegangradsatz zur Verfügung gestellt, der mit lediglich fünf Vorwärtsgangradebenen und einer zweitstufigen Bereichsgruppe elf lastschaltbare Vorwärtsgänge ermöglicht, wobei wenigstens ein Vorwärtsgang unabhängig von den Schaltzuständen der Bereichsgruppe einschaltbar und nutzbar ist. Dies kann dadurch konkretisiert sein, dass die erste Vorwärtsgangradebene zwei in Eingriff stehende Festräder umfasst, die eine Eingangskonstante bilden, wobei das erste Festrad mit der äußeren Getriebeeingangswelle drehfest verbunden ist und das zweite Festrad mit der inneren Vorgelegewelle drehfest verbunden ist, dass die zweite Vorwärtsgangradebene ein Losrad und ein mit diesem in Eingriff stehendes Festrad umfasst, wobei das Losrad auf der inneren Getriebeeingangswelle drehbar angeordnet und durch ein Schaltelement drehfest mit dieser verbindbar ist, und bei der das zugeordnete Festrad auf der äußeren Vorgelegewelle drehfest angeordnet ist, dass die dritte Vorwärtsgangradebene ein Losrad und ein mit diesem in Eingriff stehendes Festrad umfasst, wobei das Losrad axial zwischen der inneren Getriebeeingangswelle und der Hauptwelle drehbar angeordnet und durch ein Schaltelement mit der inneren Getriebeeingangswelle drehfest verbindbar ist sowie durch ein weiteres Schaltelement mit der Hauptwelle drehfest verbindbar ist, wobei das zugeordnete Festrad drehfest auf der äußeren Vorgelegewelle angeordnet ist, dass die vierte Vorwärtsgangradebene ein Losrad und ein mit diesem in Eingriff stehendes Festrad umfasst, wobei dieses Losrad auf der Hauptwelle drehbar angeordnet und durch ein Schaltelement mit dieser drehfest verbindbar ist, wobei das zugeordnete Festrad auf der äußeren Vorgelegewelle drehfest angeordnet ist, und dass die fünfte Vorwärtsgangradebene ein Losrad und ein mit diesem in Eingriff stehendes Festrad umfasst, wobei das Losrad auf der Hauptwelle drehbar angeordnet und durch ein Schaltelement mit dieser drehfest verbindbar ist, sowie das zugeordnete Festrad auf der inneren Vorgelegewelle drehfest angeordnet ist.

Um eine relativ große Gesamtspreizung des Getriebes zu ermöglichen, kann ein im Wesentlichen geometrischer Stufungsverlauf realisiert sein, der zu den höheren Gängen hin in Richtung eines teilprogressiven Stufungsverlaufs angepasst ist.

Außerdem kann vorgesehen sein, dass die Bereichsgruppe als ein Planetengetriebe ausgebildet ist, mit einem zentralen Sonnenrad, einem äußeren Hohlrad und einem Planetenträger, wobei der Planetenträger mehrere mit dem Sonnenrad und dem Hohlrad kämmende Planetenräder führt. Das Sonnenrad fungiert dabei als ein erstes Getriebeelement der Bereichsgruppe, welches mit der als das erste Getriebeelement der Hauptgruppe fungierenden Hauptwelle verbunden ist, wobei der Planetenträger als das zweite Getriebeelement der Bereichsgruppe fungiert, welcher mit der Abtriebswelle drehfest verbunden ist und durch ein axial zwischen der Bereichsgruppe und einer benachbarten Vorwärtsgangradebene angeordnetes Schaltelement mit einem auf der Hauptwelle drehbar angeordneten sowie mit dieser durch ein Schaltelement drehfest verbindbaren Losrad der Vorwärtsgangradebene, das als das zweite Getriebeelement der Hauptgruppe fungiert, verbindbar ist, und bei der das Hohlrad durch ein Schaltelement mit einem ortsfesten Bauteil verbindbar und durch ein Schaltelement mit dem Planetenträger koppelbar ist.

Durch die schaltbare Kopplung eines Losrads bzw. Gangrads mit der Abtriebswelle über den Planetenträger wird eine Antriebsmomentübertragung zum Abtrieb bereitgestellt, die unabhängig von einer Umschaltung der Bereichsgruppe zwischen einer unteren und einer oberen Ganggruppe ist. Dadurch lässt sich die Bereichsgruppe lastschaltbar in einem bestimmten Gang überbrücken. Da die Bereichsgruppe in diesem Gang nicht in den Leistungsfluss einbezogen ist, kann sie in diesem Gang ohne Zugkraftunterbrechung lastfrei umgeschaltet werden. Im Folgegang steht dann der Leistungsfluss über die Bereichsgruppe in der dann geschalteten oberen oder unteren Ganggruppe wieder zur Verfügung.

Bei einer beispielhaften Schaltfolge des Elfganggetriebes gemäß der Erfindung kann die lastschaltbare Überbrückung der Bereichsgruppe dadurch realisiert sein, dass der achte Vorwärtsgang durch Einrücken einer Verbindung zwischen dem Planetenträger der Bereichsgruppe und dem benachbarten Losrad der fünften Vorwärtsgangradebene schaltbar ist. Der achte Gang ist demnach als Stützgang während einer Bereichsumschaltung wirksam.

Weiter kann vorgesehen sein, dass der siebte Vorwärtsgang durch Schalten einer direkten Verbindung der inneren Getriebeeingangswelle mit der Hauptwelle und Schalten einer unteren Übersetzungsstufe der Bereichsgruppe als höchster Gang der unteren Ganggruppe nutzbar ist.

Im siebten Gang wird demnach die Antriebsleistung in der Hauptgruppe direkt von der zugehörigen Getriebeeingangswelle auf die Hauptwelle übertragen und in der Bereichsgruppe übersetzt. Die Übersetzung wird damit in diesem Gang nur durch die Bereichsgruppe durchgeführt. Im achten Gang kann dann die Bereichsgruppe auf die obere Ganggruppe umgeschaltet werden. Umgekehrt kann vom neunten Gang ausgehend die Bereichsgruppe im achten Gang in die untere Ganggruppe umgeschaltet werden.

Außerdem kann vorgesehen sein, dass der elfte Vorwärtsgang durch Herstellen einer direkten Verbindung der inneren Getriebeeingangswelle mit der Hauptwelle und Schalten einer oberen Übersetzungsstufe der Bereichsgruppe als ein Direktgang nutzbar ist. Dadurch wird eine lastschaltbare Direktverbindung zum Abtrieb ermöglicht, die einen hohen Wirkungsgrad aufweist.

Weiter kann eine Rückwärtsgangradebene vorgesehen sein, die axial zwischen der vierten Vorwärtsgangradebene und der fünften Vorwärtsgangradebene angeordnet ist, und die ein Losrad, ein Festrad sowie ein mit dem Losrad und dem Festrad in Eingriff stehendes drehbar gelagertes Drehrichtungsumkehrrad umfasst. Das Losrad dieser Rückwärtsgangradebene ist auf der Hauptwelle drehbar angeordnet und durch ein Schaltelement mit dieser drehfest verbindbar, während das zugeordnete Festrad auf der inneren Vorgelegewelle drehfest angeordnet ist.

Dadurch können in Kombination mit den beiden Kupplungen und einer Kopplung der beiden Vorgelegewellen sowie der Bereichsgruppe insgesamt sechs Rückwärtsgänge genutzt werden, die zum überwiegenden Teil lastschaltbar sind. Die vorgesehene Rückwärtsgangradebene kann demnach vorteilhaft der letzten Vorwärtsgangradebene axial vorgelagert sein, wobei diese letzte Vorwärtsgangradebene zur direkten Kopplung der Hauptgruppe mit dem Abtrieb, d. h. zur Überbrückung der Bereichsgruppe schaltbar ist.

Das Elfganggetriebe gemäß der Erfindung benötigt nur zehn Schaltelemente, wobei acht Schaltelemente der Hauptgruppe und zwei Schaltelemente der Bereichsgruppe zugeordnet sind. Dabei sind die Schaltelemente soweit möglich in doppelseitig betätigbaren Schaltvorrichtungen mit jeweils zwei Schaltelementen zusammengefasst, um Bauraum und Kosten zu sparen. Beispielsweise ist eine Anordnung mit sechs Schaltstellen möglich, wobei eine Schaltvorrichtung der radial inneren Getriebeeingangswelle, eine zweite und eine dritte Schaltvorrichtung der Hauptwelle, und eine vierte Schaltvorrichtungen der Bereichsgruppe zugeordnet sind. Zur schaltbaren Kopplung der Hauptgruppe mit der Bereichsgruppe ist vorzugsweise ein einseitig betätigbares Schaltelement vorgesehen. Ebenso ist für die Kopplung der beiden Vorgelegewellen ein einseitig betätigbares Schaltelement vorhanden. Die beiden einseitig betätigbaren Schaltelemente bilden dann die fünfte und die sechste Schaltstelle des Doppelkupplungsgetriebes.

Zur weiteren Verdeutlichung der Erfindung ist eine Zeichnung eines Ausführungsbeispiels beigefügt. In dieser zeigt
Fig. 1 eine schematische Ansicht eines Doppelkupplungsgetriebes gemäß der Erfindung, und
Fig. 2 ein beispielhaftes Schaltschema des Doppelkupplungsgetriebes gemäß Fig. 1.

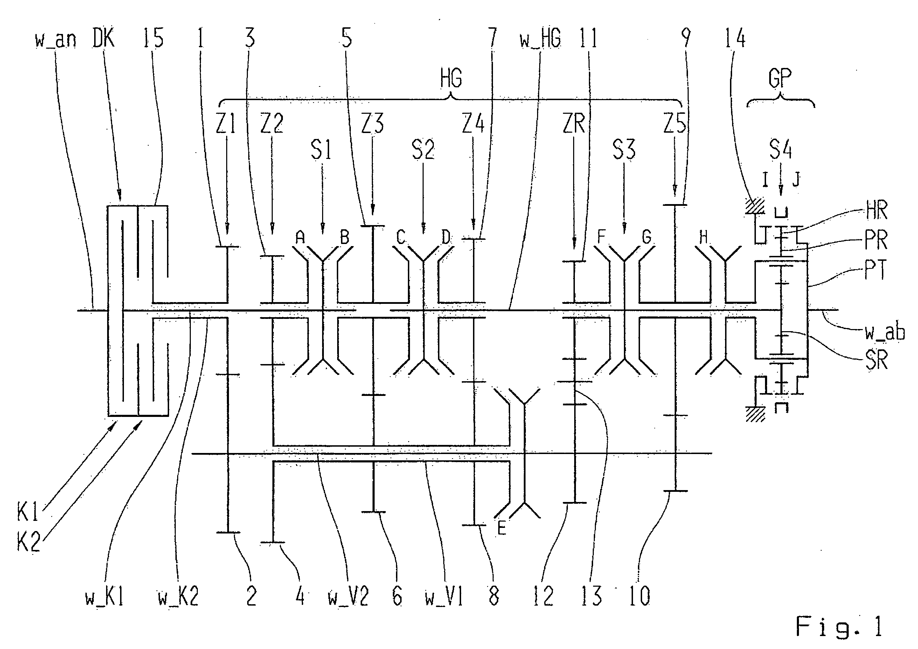

Demnach weist das in Fig. 1 dargestellte Doppelkupplungsgetriebe eine Hauptgruppe HG in Vorgelegebauweise mit mehreren Stirnradstufen und Schaltvorrichtungen sowie eine Bereichsgruppe GP in Planetenbauweise auf, die koaxial zueinander angeordnet sind. Außerdem ist eine Doppelkupplung DK mit zwei Kupplungen K1, K2 vorhanden, deren Eingangsseiten durch einen gemeinsamen Kupplungskorb 15 gebildet sind. Der Kupplungskorb 15 ist mit einer Antriebswelle w_an einer nicht dargestellten Antriebsmaschine drehfest verbunden. Die Ausgangsseiten der Doppelkupplung DK sind mit jeweils einer von zwei koaxial zueinander angeordneten Getriebeeingangswellen w_K1, w_K2 verbunden. Die Getriebeeingangswelle w_K1 der ersten Kupplung K1 ist als eine innere Vollwelle ausgebildet, die aus der Getriebeeingangswelle w_K2 der zweiten Kupplung K2, welche als eine äußere Hohlwelle ausgebildet ist, getriebeseitig heraustritt. Koaxial zu den beiden Getriebeeingangswellen w_K1, w_K2 und axial benachbart zu der ersten Getriebeeingangswelle w_K1 ist eine Hauptwelle w_HG angeordnet, welche dem Hauptgetriebe HG zugeordnet ist. Weiterhin sind zwei Vorgelegewellen w_V1, w_V2 vorhanden, wobei die erste Vorgelegewelle w_V1 als eine Hohlwelle ausgebildet ist, in der die zweite, als Vollwelle ausgebildete zweite Vorgelegewelle w_V2 drehbar gelagert angeordnet ist und axial beidseitig aus der Hohlwelle w_V1 herausragt.

Die Hauptgruppe HG umfasst fünf Vorwärtsgangradebenen Z1, Z2, Z3, Z4, Z5 und eine Rückwärtsgangradebene ZR mit jeweils zugehörigen Stirnrädern. In der ersten Vorwärtsgangradebene Z1 kämmt ein an der zweiten Getriebeeingangswelle w_K2 befestigtes Festrad 1 mit einem an der zweiten Vorgelegewelle w_V2 befestigten Festrad 2. Die Vorwärtsgangradebene Z1 ist als eine Eingangskonstante der zweiten Kupplung K2 bzw. der zweiten Getriebeeingangswelle w_K2 wirksam. In der zweiten Vorwärtsgangradebene Z2 kämmt ein auf der ersten Getriebeeingangswelle w_K1 angeordnetes Losrad 3 mit einem an der ersten Vorgelegewelle w_V1 befestigten Festrad 4. In der dritten Vorwärtsgangradebene Z3 kämmt ein auf der ersten Getriebeeingangswelle w_K1 und der Hauptwelle w_HG drehbar gelagertes zweites Losrad 5 mit einem an der ersten Vorgelegewelle w_V1 befestigten zweiten Festrad 6. In der vierten Vorwärtsgangradebene Z4 kämmt ein auf der Hauptwelle w_HG drehbar gelagertes Losrad 7 mit einem an der ersten Vorgelegewelle w_V1 drehfest angeordneten dritten Festrad 8. In der fünften Vorwärtsgangradebene Z5 kämmt ein auf der Hauptwelle w_HG drehbar gelagertes Losrad 9 mit einem Festrad 10 der zweiten Vorgelegewelle w_V2.

Zwischen der vierten Vorwärtsgangradebene Z4 und der fünfte Vorwärtsgangradebene Z5 ist eine Rückwärtsgangradebene ZR angeordnet, in der ein auf der Hauptwelle w_HG drehbar gelagertes Losrad 11 und ein Festrad 12 der zweiten Vorgelegewelle w_V2 mit einem drehbar gelagerten Drehrichtungsumkehrrad 13 in Verzahnungseingriff sind.

Die Bereichsgruppe GP umfasst ein zentrales Sonnenrad SR, ein äußeres Hohlrad HR und einen Planetenträger PT, der mehrere mit dem Sonnenrad SR und dem Hohlrad HR kämmende Planetenräder PR führt. Das Sonnenrad SR ist mit dem ausgangsseitigen Ende der Hauptwelle w_HG drehfest verbunden. Ausgangsseitig ist eine Abtriebswelle w_ab koaxial zu der Hauptwelle w_HG und zu den beiden Getriebeeingangswellen w_K1, w_K2 angeordnet. Die Abtriebswelle w_ab ist mit dem ausgangsseitigen Ende des Planetenträgers PT drehfest verbunden.

Zum Schalten der als Losräder 3, 5, 7, 9, 11 und der als schaltbare Planetenradsatzkomponenten HR, PT ausgebildeten Getriebeelemente sowie zum Schalten von Verbindungen von den als Wellen w_K1, w_HG, w_V1, w_V2 ausgebildeten schaltbaren Getriebeelementen sind vier doppelseitig bzw. wechselseitig wirkende Schaltvorrichtungen S1, S2, S3, S4 mit acht Schaltelementen A, B, C, D, F, G I, J sowie zwei einseitig wirksame Schaltvorrichtungen E, H vorgesehen.

In dem gezeigten Ausführungsbeispiel sind die Schaltelemente A, B, C, D, E, F, G, H der Hauptgruppe HG mit Synchronisierungen ausgebildet und die Schaltelemente I, J der Bereichsgruppe GP als Klauenkupplungen ausgebildet.

Die erste Schaltvorrichtung S1 dient wechselseitig zur Kopplung des Losrades 3 der zweiten Vorwärtsgangradebene Z2 mit der ersten Getriebeeingangswelle w_K1 durch das erste Schaltelement A und zur Kopplung des Losrades 5 der dritten Vorwärtsgangradebene Z3 mit der ersten Getriebeeingangswelle w_K1 durch das zweite Schaltelement B.

Die zweite Schaltvorrichtung S2 dient wechselseitig zur Kopplung des Losrades 5 der dritten Vorwärtsgangradebene Z3 mit der Hauptwelle w_HG durch das dritte Schaltelement C sowie zur Kopplung des Losrades 7 der vierten Vorwärtsgangradebene Z4 mit der Hauptwelle w_HG durch das vierte Schaltelement D. Durch Einrücken des zweiten Schaltelements B und des dritten Schaltelements C ist eine Direktverbindung der ersten Getriebeeingangswelle w_K1 mit der Hauptwelle w_HG herstellbar.

Die dritte Schaltvorrichtung S3 dient wechselseitig zur Kopplung des Losrades 11 der Rückwärtsgangradebene ZR mit der Hauptwelle w_HG durch das sechste Schaltelement F sowie zur Kopplung des Losrades 9 der fünften Vorwärtsgangradebene Z5 mit der Hauptwelle w_HG durch das siebte Schaltelement G.

Die der Bereichsgruppe GP zugehörige vierte Schaltvorrichtung S4 dient wechselseitig zur Kopplung des Hohlrades HR mit einem ortsfesten Bauteil bzw. Gehäuseteil 14 durch das neunte Schaltelement I sowie zur Kopplung des Hohlrades HR mit dem Planetenträger PT durch das zehnte Schaltelement J. Durch die Kopplung mit dem Gehäuse 14 wird eine kurze Übersetzung des Planetengetriebes GP geschaltet, zur Nutzung einer unteren Ganggruppe. Durch die Kopplung mit dem Planetenträger PT wird das Planetengetriebe GP verblockt, so dass eine direkte Übersetzung bzw. eine direkte Verbindung zwischen der Hauptwelle w_HG und der Abtriebswelle w_ab gegeben ist.

Das nur einseitig wirksame fünfte Schaltelement E ist als eine Koppelvorrichtung zur drehfesten Kopplung der beiden Vorgelegewellen w_V1, w_V2 nutzbar.

Das nur einseitig wirksame achte Schaltelement H ist zur direkten Kopplung des Losrades 9 der fünften Vorwärtsgangradebene Z5 mit dem Planetenträger PT und dadurch zur direkten Kopplung des Losrades 9 mit der Abtriebswelle w_ab bestimmt. Durch dieses Schaltelement H ist die Bereichsgruppe GP unabhängig von den Schaltzuständen der zugeordneten Schaltvorrichtung S4 zur Abtriebswelle w_ab hin überbrückbar. Die Leistungsübertragung erfolgt dabei über die zweite Kupplung K2, die erste Vorwärtsgangradebene Z1 als antreibende Stirnradstufe, die zweite Vorgelegewelle w_V2 und die fünfte Vorwärtsgangradebene Z5 als angetriebene Stirnradstufe. Das Planetengetriebe GP läuft in einer Neutralstellung der zugehörigen Schaltvorrichtung S4 sowie bei offener Verbindung zwischen der ersten Getriebeeingangswelle w_K1 und der Hauptwelle w_HG bzw. offener ersten Kupplung K1 auch in der unteren Übersetzung bei aktiviertem Schaltelement I und in der oberen Übersetzung bei aktiviertem Schaltelement J ohne Leistungsübertragung mit, und kann daher lastfrei umgeschaltet werden.

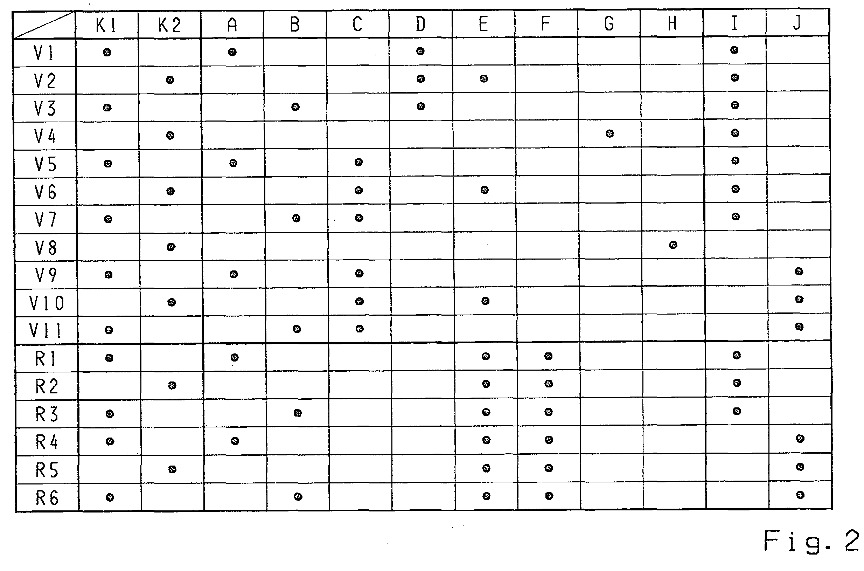

Das vorgestellte Doppelkupplungsgetriebe ermöglicht mindestens elf lastschaltbare Vorwärtsgänge V1, V2, V3, V4, V5, V6, V7, V8, V9, V10, V11 und sechs teilweise lastschaltbare Rückwärtsgänge R1, R2, R3, R4, R5, R6. Die beigefügte Fig. 2 zeigt dazu ein beispielhaftes Schaltschema. Die jeweils aktivierten Schaltelemente sind in der Tabelle der Fig. 2 durch einen Punkt markiert. Die Schaltungen erfolgen demnach alternierend über die beiden Kupplungen K1, K2, beginnend mit der ersten Kupplung K1. In den ersten sieben Gängen ist die untere Übersetzung der Bereichsgruppe GP aktiviert, wie die Punkte in der Spalte I verdeutlichen. Bedarfsweise werden die beiden Vorgelegewellen w_V1, w_V2 miteinander gekoppelt, welches durch Einrücken des Schaltelementes E erfolgt. Die Gangwechsel innerhalb der Hauptgruppe HG erfolgen zugkraftunterbrechungsfrei in an sich bekannter Weise durch Vorwählen des jeweiligen Folgegangs und anschließendem zeitlich überschneidenden Öffnen der Kupplung K1 bzw. K2 des aktiven Gangs sowie Schließen der Kupplung K2 bzw. K1 des neuen Gangs.

Der siebte Vorwärtsgang V7 ist als höchster Gang der unteren Ganggruppe ausgebildet. Die erste Getriebeeingangswelle w_K1 ist in diesem Gang mit der Hauptwelle w_HG über die betreffenden aktivierten Schaltelemente B, C direkt verbunden. Die Übersetzung dieses Ganges entspricht der unteren Übersetzung der Bereichsgruppe GP.

Im achten Vorwärtsgang V8 wird die Bereichsgruppe GP durch Einrücken des Schaltelements H überbrückt. Der Leistungsfluss verläuft über die zweite Kupplung K2, die erste Vorwärtsgangradebene Z1, die fünfte Vorwärtsgangradebene Z5 und über den mit der fünften Vorwärtsgangradebene Z5 durch das achte Schaltelement H gekoppelten Planetenträger PT zur Abtriebswelle w_ab. Die Bereichsgruppe GP ist in diesem achten Vorwärtsgang V8 nicht in den Leistungsfluss einbezogen und kann daher für den Folgegang (neunter Vorwärtsgang V9) auf die obere Ganggruppe bzw. den Blockumlauf lastfrei umgeschaltet werden. Die Aktivierung des neunten Vorwärtsganges V9 erfolgt dann durch Schließen der ersten Kupplung K1 und Öffnen der zweiten Kupplung K2 zugkraftunterbrechungsfrei, vergleichbar zu einem Gangwechsel innerhalb der Hauptgruppe HG.

Der zehnte und der elfte Vorwärtsgang V10, V11 werden wiederum innerhalb der Hauptgruppe HG geschaltet, wobei der elfte Gang V11 als ein Direktgang ausgebildet ist und durch Einrücken der Schaltelemente B und C bei eingerücktem Schaltelement J realisiert wird.

Die sechs Rückwärtsgänge R1, R2, R3, R4, R5, R6 werden über die Rückwärtsgangebene ZR gebildet, wobei die beiden Vorgelegewellen w_V1, w_V2 jeweils miteinander gekoppelt sind. Der Wechsel zwischen dem dritten Rückwärtsgang R3 und dem vierten Rückwärtsgang R4, bei dem die Bereichsgruppe GP umgeschaltet wird, erfolgt zugkraftunterbrochen, da beide Gänge R3, R4 über die gleiche Kupplung K1 mit einem Antriebsdrehmoment versorgt werden. Die übrigen Rückwärtsgangwechsel sind lastschaltbar durchführbar.

### Bezugszeichenliste

- 1: Festrad an der zweiten Getriebeeingangswelle
- 2: Festrad an der zweiten Vorgelegewelle
- 3: Losrad an der ersten Getriebeeingangswelle
- 4: Festrad an der ersten Vorgelegewelle
- 5: Losrad an der ersten Getriebeeingangswelle
- 6: Festrad an der ersten Vorgelegewelle
- 7: Losrad an der Hauptwelle
- 8: Festrad an der ersten Vorgelegewelle
- 9: Losrad an der Hauptwelle
- 10: Festrad an der zweiten Vorgelegewelle
- 11: Losrad an der Hauptwelle
- 12: Festrad der der zweiten Vorgelegewelle
- 13: Drehrichtungsumkehrrad
- 14: Ortsfestes Bauteil
- 15: Doppelkupplungskorb
- A: Schaltelement
- B: Schaltelement
- C: Schaltelement
- D: Schaltelement
- E: Schaltelement
- F: Schaltelement
- G: Schaltelement
- H: Schaltelement
- I: Schaltelement
- J: Schaltelement
- DK: Doppelkupplung
- GP: Bereichsgruppe
- HG: Hauptgruppe
- HR: Hohlrad
- PR: Planetenrad
- PT: Planetenträger
- SR: Sonnenrad
- K1: Erste Kupplung
- K2: Zweite Kupplung
- R1: Erster Rückwärtsgang
- R2: Zweiter Rückwärtsgang
- R3: Dritter Rückwärtsgang
- R4: Vierter Rückwärtsgang
- R5: Fünfter Rückwärtsgang
- R6: Sechster Rückwärtsgang
- S1: Erste Schaltvorrichtung
- S2: Zweite Schaltvorrichtung
- S3: Dritte Schaltvorrichtung
- S4: Vierte Schaltvorrichtung
- V1: Erster Vorwärtsgang
- V2: Zweiter Vorwärtsgang
- V3: Dritter Vorwärtsgang
- V4: Vierter Vorwärtsgang
- V5: Fünfter Vorwärtsgang
- V6: Sechster Vorwärtsgang
- V7: Siebter Vorwärtsgang
- V8: Achter Vorwärtsgang
- V9: Neunter Vorwärtsgang
- V10: Zehnter Vorwärtsgang
- V11: Elfter Vorwärtsgang
- Z1: Erste Vorwärtsgangradebene
- Z2: Zweite Vorwärtsgangradebene
- Z3: Dritte Vorwärtsgangradebene
- Z4: Vierte Vorwärtsgangradebene
- Z5: Fünfte Vorwärtsgangradebene
- ZR: Rückwärtsgangradebene
- w_an: Antriebswelle
- w_ab: Abtriebswelle
- w_HG: Hauptwelle
- w_K1: Erste Getriebeeingangswelle
- w_K2: Zweite Getriebeeingangswelle
- w_V1: Erste Vorgelegewelle
- w_V2: Zweite Vorgelegewelle

## Patentansprüche

1. Doppelkupplungsgetriebe mit zwei Kupplungen (K1, K2), deren Eingangsseiten mit einer Antriebswelle (w_an) und deren Ausgangsseiten mit jeweils einer von zwei Getriebeeingangswellen (w_K1, w_K2) verbunden sind, wobei eine Getriebeeingängswelle (w_K1) als radial innere Vollwelle ausgebildet ist, die in der axial kürzeren und als Hohlwelle ausgebildeten zweiten Getriebeeingangswellen (w_K2) drehbar aufgenommen ist, mit mindestens zwei Vorgelegewellen (w_V1, w_V2), von denen eine Vorgelegewelle (w_V1, w_V2) als eine radial innere Vollwelle ausgebildet ist und in einer axial kürzeren äußeren Hohlwelle drehbar aufgenommen ist, mit einer koaxial hinter der Antriebswelle (w_an) angeordneten Abtriebswelle (w_ab), mit einer koaxial zwischen der inneren Getriebeeingangswelle (w_K1) und der Abtriebswelle (w_ab) angeordneten Hauptwelle (w_HG), mit einer mehrstufigen Hauptgruppe (HG), in der mehrere Vorwärtsgangradebenen (Z1, Z2, Z3, Z4, Z5) vorgesehen sind, mit einer der Hauptgruppe (HG) antriebstechnisch nachgeordneten mehrstufigen Bereichsgruppe (GP), und mit mehreren Schaltelementen (A, B, C, D, E, F, G, H, I, J) zum Schalten von Getriebeelementen (3, 5, 7, 9, 11, HR, PT, w_K1, w_HG, w_V1, w_V2) und/oder Getriebeelementverbindungen, bei dem ein erstes Getriebeelement (w_HG) der Hauptgruppe (HG) mit einem ersten Getriebeelement (SR) der Bereichsgruppe (GP) verbunden ist, und bei dem ein zweites Getriebeelement'(9) der Hauptgruppe (HG) mit einem zweiten Getriebeelement (PT) der Bereichsgruppe (GP), welches mit der Abtriebswelle (w_ab) verbunden oder verbindbar ist, durch ein Schaltelement (H) verbindbar ist, **dadurch gekennzeichnet, dass** auf der äußeren Vorgelegewelle (w_V1) zumindest drei Festräder (4, 6, 8) angeordnet sind, die mit jeweils einem Losrad (3, 5, 7) in Verzahnungseingriff sind, und dass die beiden Vorgelegewellen (w_V1, w_V2) durch ein einseitig betätigbares Schaltelement (E) drehfest miteinander verbindbar sind, wobei das zu diesem Schaltelement (E) nahe Losrad (7) auf der Hauptwelle (w_HG) drehbar gelagert und mit dieser drehfest verbindbar ist, wobei das zu diesem Schaltelement (E) ferne Losrad (3) auf der inneren Getriebeeingangswelle (w_K1) drehbar gelagert und mit dieser drehfest verbindbar ist, und dass ein mittleres Losrad (5) axial zwischen den beiden genannten Losrädern (3, 7) drehbar angeordnet sowie mit der inneren Getriebeeingangswelle (w_K1), mit der Hauptwelle (w_HG) oder mit diesen beiden Wellen (w_K1, w_HG) drehfest verbindbar ist.

2. Doppelkupplungsgetriebe nach Anspruch 1, **dadurch gekennzeichnet, dass** bei fünf Vorwärtsgangradebenen (Z1, Z2, Z3, Z4, Z5) der Hauptgruppe (HG) und zwei Übersetzungsstufen der Bereichsgruppe (GP) mindestens elf lastschaltbare Vorwärtsgänge (V1, V2, V3, V4, V5, V6, V7, V8, V9, V10, V11) nutzbar sind, wobei wenigstens ein Vorwärtsgang (V8) unabhängig von den Schaltzuständen der Bereichsgruppe (GP) nutzbar ist.

3. Doppelkupplungsgetriebe nach Anspruch 1 oder 2, **dadurch gekennzeichnet, dass** die erste Vorwärtsgangradebene (Z1) zwei in Eingriff stehende Festräder (1, 2) umfasst, die eine Eingangskonstante bilden, wobei das erste Festrad (1) der ersten Vorwärtsgangradebene mit der äußeren Getriebeeingangswelle (w_K2) drehfest verbunden ist und das zweite Festrad (2) der ersten Vorwärtsgangradebene mit der inneren Vorgelegewelle (w_V2) drehfest verbunden ist, dass die zweite Vorwärtsgangradebene (Z2) ein Losrad (3) und ein mit diesem in Eingriff stehendes Festrad (4) umfasst, wobei das Losrad (3) der zweiten Vorwärtsgangradebene auf der inneren Getriebeeingangswelle (w_K1) drehbar angeordnet und durch ein Schaltelement (A) drehfest mit dieser verbindbar ist, sowie das zugeordnete Festrad (4) der zweiten Vorwärtsgangradebene auf der äußeren Vorgelegewelle (w_V1) drehfest angeordnet ist, dass die dritte Vorwärtsgangradebene (Z3) ein Losrad (5) und ein mit diesem in Eingriff stehendes Festrad (6) umfasst, wobei das Losrad (5) der dritten Vorwärtsgangradebene axial zwischen der inneren Getriebeeingangswelle (w_K1) und der Hauptwelle (w_HG) drehbar angeordnet und durch ein Schaltelement (B) mit der inneren Getriebeeingangswelle (w_K1) drehfest verbindbar ist sowie durch ein Schaltelement (C) mit de Hauptwelle (w_HG) drehfest verbindbar ist, und dass das zugeordnete Festrad (6) der dritten Vorwärtsgangradebene drehfest auf der äußeren Vorgelegewelle (w_V1) angeordnet ist, dass die vierte Vorwärtsgangradebene (Z4) ein Losrad (7) und ein mit diesem in Eingriff stehendes Festrad (8) umfasst, wobei das Losrad (7) der vierten Vorwärtsgangradebene auf der Hauptwelle (w_HG) drehbar angeordnet und durch ein Shaltelement (D) mit dieser drehfest verbindbar ist, sowie das zugeordnete Festrad (8) der vierten Vorwärtsgangradebene auf der äußeren Vorgelegewelle (w_V1) drehfest angeordnet ist, und dass die fünfte Vorwärtsgangradebene (Z5) ein Losrad (9) und ein mit diesem in Eingriff stehendes Festrad (10) umfasst, wobei das Losrad (9) der fünften Vorwärtsgangradebene auf der Hauptwelle (w_HG) drehbar angeordnet und durch ein Schaltelement (G) mit dieser drehfest verbindbar ist, sowie das zugeordnete Festrad (10) der fünften Vorwärtsgangradebene auf der inneren Vorgelegewelle (w_V2) drehfest angeordnet ist.

4. Doppelkupplungsgetriebe nach einem der Ansprüche 1 bis 3, **dadurch gekennzeichnet, dass** ein Stufungsverlauf vorgesehen ist, der in der Schaltfolge von einer im Wesentlichen geometrischen Gangstufung in eine im Wesentlichen progressive Gangstufung übergeht.

5. Doppelkupplungsgetriebe nach einem der Ansprüche 1 bis 4, **dadurch gekennzeichnet, dass** die Bereichsgruppe (GP) als ein Planetengetriebe ausgebildet ist, mit einem zentralen Sonnenrad (SR), einem äußeren Hohlrad (HR) und einem Planetenträger (PT), der mehrere zwischen dem Sonnenrad (SR) und dem Hohlrad (HR) kämmende Planetenräder (PR) führt, wobei das Sonnenrad (SR) als das erste Getriebeelement der Bereichsgruppe (GP) fungiert, welches mit der Hauptwelle (w_HG), die als das erste Getriebeelement der Hauptgruppe (HG) fungiert, verbunden ist, wobei der Planetenträger (PT) als das zweite Getriebeelement der Bereichsgruppe (GP) fungiert, welches mit der Abtriebswelle (w_ab) drehfest verbunden ist und durch ein axial zwischen der Bereichsgruppe (GP) und einer benachbarten Vorwärtsgangradebene (Z5) angeordnetes Schaltelement (H) mit einem auf der Hauptwelle (w_HG) drehbar angeordneten und mit dieser durch ein Schaltelement (G) drehfest verbindbaren Losrad (9) der Vorwärtsgangradebene (Z5), das als das zweite Getriebeelement der Hauptgruppe (HG) fungiert, verbindbar ist, und wobei das Hohlrad (HR) durch ein Schaltelement (I) mit einem ortsfesten Bauteil (14) verbindbar ist und durch ein Schaltelement (J) mit dem Planetenträger (PT) koppelbar ist.

6. Doppelkupplungsgetriebe nach einem der Ansprüche 1 bis 5, **dadurch gekennzeichnet, dass** der siebte Vorwärtsgang (V7) durch Schalten einer direkten Verbindung der inneren Getriebeeingangswelle (w_K1) mit der Hauptwelle (w_HG) und Schalten einer unteren Übersetzungsstufe der Bereichsgruppe (GP) als höchster Gang einer unteren Ganggruppe schaltbar ist.

7. Doppelkupplungsgetriebe nach einem der Ansprüche 1 bis 6, **dadurch gekennzeichnet, dass** der elfte Vorwärtsgang (V11) durch Schalten einer direkten Verbindung der inneren Getriebeeingangswelle (w_K1) mit der Hauptwelle (w_HG) und Schalten einer oberen Übersetzungsstufe der Bereichsgruppe (GP) als ein Direktgang schaltbar ist.

8. Doppelkupplungsgetriebe nach einem der Ansprüche 1 bis 7, **dadurch gekennzeichnet, dass** der achte Vorwärtsgang (V8) durch Schalten einer Verbindung zwischen dem Planetenträger (PT) der Bereichsgruppe (GP) und dem benachbarten Losrad (9) der fünften Vorwärtsgangradebene (Z5) unabhängig von den Schaltzuständen der Bereichsgruppe (GP) schaltbar ist.

9. Doppelkupplungsgetriebe nach einem der Ansprüche 1 bis 8, **dadurch gekennzeichnet, dass** eine Rückwärtsgangradebene (ZR) vorgesehen ist, die axial zwischen der vierten Vorwärtsgangradebene (Z4) und der fünften Vorwärtsgangradebene (Z5) angeordnet ist, dass die Rückwärtsgangradebene (ZR) ein Losrad (11) und ein Festrad (12) sowie ein mit dem Losrad (11) und dem Festrad (12) in Eingriff stehendes drehbar gelagertes Drehrichtungsumkehrrad (13) umfasst, wobei das Losrad (11) der Rückwärtsgangradebene auf der Hauptwelle (w_HG) drehbar angeordnet und durch ein Schaltelement (F) mit dieser drehfest verbindbar ist sowie das Festrad (12) der Rückwärtsgangradebene auf der inneren Vorgelegewelle (w_V2) drehfest angeordnet ist, wobei sechs, zumindest teilweise lastschaltbare Rückwärtsgänge nutzbar sind.

10. Doppelkupplungsgetriebe nach einem der Ansprüche 1 bis 9, **dadurch gekennzeichnet, dass** zehn Schaltelemente (A, B, C, D, E, F, G, H, I, J) angeordnet sind, wobei acht Schaltelemente (A, B, C, D, E, F, G, H) der Hauptgruppe (HG) und zwei Schaltelemente (I, J) der Bereichsgruppe (GP) zugeordnet sind, wobei sechs Schaltelemente (A, B, C, D, F, G) der Hauptgruppe (HG) in doppelseitig betätigbaren Schaltvorrichtungen (S1, S2, S3) mit jeweils zwei Schaltelementen (A-B, C-D, F-G,) zusammengefasst sind, und die beiden Schaltelemente (I, J) der Bereichsgruppe (GP) in einer weiteren doppelseitig betätigbaren Schaltvorrichtung (S4) zusammengefasst sind.

## Claims

1. Double clutch transmission having two clutches (K1, K2), the input sides of which are connected to a drive shaft (w an) and the output sides of which are connected to in each case one of two transmission input shafts (w_K1, w_K2), one transmission input shaft (w_K1) being configured as a radially inner solid shaft which is received rotatably in the axially shorter second transmission input shaft (w_K2) which is configured as a hollow shaft, having at least two countershafts (w_V1, w_V2), of which one countershaft (w_V1, w_V2) is configured as a radially inner solid shaft and is received rotatably in an axially shorter outer hollow shaft, having an output shaft (w_ab) which is arranged coaxially behind the drive shaft (w_an), having a main shaft (w_HG) which is arranged coaxially between the inner transmission input shaft (w_K1) and the output shaft (w_ab), having a multiple-stage main group (HG), in which a plurality of forward gearwheel planes (Z1, Z2, Z3, Z4, Z5) are provided, having a multiple-stage range group (GP) which is arranged downstream of the main group (HG) in drive terms, and having a plurality of selector elements (A, B, C, D, E, F, G, H, I, J) for selecting transmission elements (3, 5, 7, 9, 11, HR, PT, w_K1, w_HG, w_V1, W_V2) and/or transmission element connections, in which double clutch transmission a first transmission element (w_HG) of the main group (HG) is connected to a first transmission element (SR) of the range group (GP), and in which double clutch transmission a second transmission element (9) of the main group (HG) can be connected by way of a selector element (H) to a second transmission element (PT) of the range group (GP), which second transmission element (PT) is connected or can be connected to the output shaft (w_ab), **characterized in that** at least three fixed gears (4, 6, 8) which are in toothing engagement with in each case one movable gear (3, 5, 7) are arranged on the outer countershaft (w_V1), and **in that** the two countershafts (w_V1, w_V2) can be connected fixedly to one another so as to rotate together by way of a selector element (E) which can be actuated on one side, the movable gear (7) which is close to the said selector element (E) being mounted rotatably on the main shaft (w_HG) and being capable of being connected fixedly to the latter so as to rotate with it, the movable gear (3) which is remote from the said selector element (E) being mounted rotatably on the inner transmission input shaft (w_K1) and being capable of being connected fixedly to the latter so as to rotate with it, and **in that** a middle movable gear (5) is rotatably arranged axially between the two said movable gears (3, 7) and can be connected fixedly to the inner transmission input shaft (w_K1), to the main shaft (w_HG) or to the said two shafts (w_K1, w_HG) so as to rotate with it/them.

2. Double clutch transmission according to Claim 1, **characterized in that**, in the case of five forward gearwheel planes (Z1, Z2, Z3, Z4, Z5) of the main group (HG) and two transmission stages of the range group (GP), at least eleven power-shift forward gears (V1, V2, V3, V4, V5, V6, V7, V8, V9, V10, V11) can be used, it being possible for at least one forward gear (V8) to be used independently of the switching states of the range group (GP).

3. Double clutch transmission according to Claim 1 or 2, **characterized in that** the first forward gearwheel plane (Z1) comprises two fixed gears (1, 2) which are in engagement and form an input constant, the first fixed gear (1) of the first forward gearwheel plane being connected fixedly to the outer transmission input shaft (w_K2) so as to rotate with it, and the second fixed gear (2) of the first forward gearwheel plane being connected fixedly to the inner countershaft (w_V2) so as to rotate with it, **in that** the second forward gearwheel plane (Z2) comprises a movable gear (3) and a fixed gear (4) which is in engagement with the latter, the movable gear (3) of the second forward gearwheel plane being arranged rotatably on the inner transmission input shaft (w_K1) and being capable of being connected fixedly to the latter so as to rotate with it by way of a selector element (A), and the associated fixed gear (4) of the second forward gearwheel plane being arranged fixedly on the outer countershaft (w_V1) so as to rotate with it, **in that** the third forward gearwheel plane (Z3) comprises a movable gear (5) and a fixed gear (6) which is in engagement with the latter, the movable gear (5) of the third forward gearwheel plane being rotatably arranged axially between the inner transmission input shaft (w_K1) and the main shaft (w_HG) and being capable of being connected fixedly to the inner transmission input shaft (w_K1) so as to rotate with it by way of a selector element (B) and being capable of being connected fixedly to the main shaft (w_HG) so as to rotate with it by way of a selector element (C), and **in that** the associated fixed gear (6) of the third forward gearwheel plane is arranged fixedly on the outer countershaft (w_V1) so as to rotate with it, **in that** the fourth forward gearwheel plane (Z4) comprises a movable gear (7) and a fixed gear (8) which is in engagement with the latter, the movable gear (7) of the fourth forward gearwheel plane being arranged rotatably on the main shaft (w_HG) and being capable of being connected fixedly to the latter so as to rotate with it by way of a selector element (D), and the associated fixed gear (8) of the fourth forward gearwheel plane being arranged fixedly on the outer countershaft (w_V1) so as to rotate with it, and **in that** the fifth forward gearwheel plane (Z5) comprises a movable gear (9) and a fixed gear (10) which is in engagement with the latter, the movable gear (9) of the fifth forward gearwheel plane being arranged rotatably on the main shaft (w_HG) and being capable of being connected fixedly to the latter so as to rotate with it by way of a selector element (G), and the associated fixed gear (10) of the fifth forward gearwheel plane being arranged fixedly on the inner countershaft (w_V2) so as to rotate with it.

4. Double clutch transmission according to one of Claims 1 to 3, **characterized in that** a shift curve is provided which transitions in the shift sequence from a substantially geometric gear spread into a substantially progressive gear spread.

5. Double clutch transmission according to one of Claims 1 to 4, **characterized in that** the range transmission (GP) is configured as a planetary gear mechanism, with a central sun gear (SR), an outer internal gear (HR) and a planetary carrier (PT) which guides a plurality of planetary gears (PR) which mesh between the sun gear (SR) and the internal gear (HR), the sun gear (SR) acting as the first transmission element of the range group (GP), which first transmission element is connected to the main shaft (w_HG) which acts as the first transmission element of the main group (HG), the planetary carrier (PT) acting as the second transmission element of the range group (GP), which second transmission element is connected fixedly to the output shaft (w_ab) so as to rotate with it and can be connected by way of a selector element (H) which is arranged axially between the range group (GP) and an adjacent forward gearwheel plane (Z5) to a movable gear (9) of the forward gearwheel plane (Z5), which movable gear (9) is arranged rotatably on the main shaft (w_HG), can be connected fixedly to the latter so as to rotate with it by way of a selector element (G), and acts as the second transmission element of the main group (HG), and it being possible for the internal gear (HR) to be connected by way of a selector element (I) to a stationary component (14) and to be coupled by way of a selector element (J) to the planetary carrier (PT).

6. Double clutch transmission according to one of Claims 1 to 5, **characterized in that** the seventh forward gear (V7) can be selected as highest gear of a lower gear group by way of selection of a direct connection of the inner transmission input shaft (w_K1) to the main shaft (w_HG) and selection of a lower transmission stage of the range group (GP).

7. Double clutch transmission according to one of Claims 1 to 6, **characterized in that** the eleventh forward gear (V11) can be selected as a direct gear by way of selection of a direct connection of the inner transmission input shaft (w_K1) to the main shaft (w_HG) and selection of an upper transmission stage of the range group (GP).

8. Double clutch transmission according to one of Claims 1 to 7, **characterized in that** the eighth forward gear (V8) can be selected by way of selection of a connection between the planetary carrier (PT) of the range group (GP) and the adjacent movable gear (9) of the fifth forward gearwheel plane (Z5) independently of the switching states of the range group (GP).

9. Double clutch transmission according to one of Claims 1 to 8, **characterized in that** a reverse gearwheel plane (ZR) is provided which is arranged axially between the fourth forward gearwheel plane (Z4) and the fifth forward gearwheel plane (Z5), **in that** the reverse gearwheel plane (ZR) comprises a movable gear (11) and a fixed gear (12) and a rotatably mounted rotational direction reversal gear (13) which is in engagement between the movable gear (11) and the fixed gear (12), the movable gear (11) of the reverse gearwheel plane being arranged rotatably on the main shaft (w_HG) and being capable of being connected fixedly to the latter so as to rotate with it by way of a selector element (F), and the fixed gear (12) of the reverse gearwheel plane being arranged fixedly on the inner countershaft (w_V2) so as to rotate with it, it being possible for six, at least partially power-shift reverse gears to be used.

10. Double clutch transmission according to one of Claims 1 to 9, **characterized in that** ten selector elements (A, B, C, D, E, F, G, H, I, J) are arranged, eight selector elements (A, B, C, D, E, F, G, H) being assigned to the main group (HG) and two selector elements (I, J) being assigned to the range group (GP), six selector elements (A, B, C, D, F, G) of the main group (HG) being combined in selector apparatuses (S1, S2, S3) which can be actuated in a double-sided manner with in each case two selector elements (A-B, C-D, F-G), and the two selector elements (I, J) of the range group (GP) being combined in a further selector apparatus (S4) which can be actuated in a double-sided manner.

## Revendications

1. Boîte de vitesses à double embrayage avec deux embrayages (K1, K2), dont les côtés d'entrée sont reliés à un arbre primaire (w_an) et dont les côtés de sortie sont reliés respectivement à un de deux arbres d'entrée de boîte de vitesse (w_K1, w_K2), dans laquelle un arbre d'entrée de boîte de vitesses (w_K1) est formé par un arbre plein radialement intérieur, qui est logé de façon rotative dans le deuxième arbre d'entrée de boîte de vitesses (w_K2) axialement plus court et formé par un arbre creux, avec au moins deux arbres intermédiaires (w_V1, w_V2), parmi lesquels un arbre intermédiaire (w_V1, w_V2) est formé par un arbre plein radialement intérieur et est logé de façon rotative dans un arbre creux extérieur axialement plus court, avec un arbre de commande (w_ab) disposé coaxialement derrière l'arbre primaire (w_an), avec un arbre secondaire (w_HG) disposé coaxialement entre l'arbre d'entrée de boîte de vitesses intérieur (w_K1) et l'arbre secondaire (w_ab), avec un groupe principal à plusieurs étages (HG), dans lequel il est prévu plusieurs plans de pignons de marche avant (Z1, Z2, Z3, Z4, Z5), avec un groupe de zone à plusieurs étages (GP) disposé cinématiquement en aval du groupe principal (HG), et avec plusieurs éléments de changement de vitesse (A, B, C, D, E, F, G, H, I, J) pour changer des éléments de boîte de vitesses (3, 5, 7, 9, 11, HR, PT, w_K1, w_HG, w_V1, w_V2) et/ou de liaisons d'éléments de boîte de vitesses, dans lequel un premier élément de boîte de vitesses (w_HG) du groupe principal (HG) est relié à un premier élément de boîte de vitesses (SR) du groupe de zone (GP), et dans lequel un deuxième élément de boîte de vitesses (9) du groupe principal (HG) peut être relié par un élément de changement de vitesse (H) à un deuxième élément de boîte de vitesses (PT) du groupe de zone (GP), qui est ou peut être relié à l'arbre de commande (w_ab), **caractérisée en ce qu'**au moins trois pignons fixes (4, 6, 8) sont disposés sur l'arbre intermédiaire extérieur (w_V1), qui sont chacun en prise avec un pignon fou (3, 5, 7), et **en ce que** les deux arbres intermédiaires (w_V1, w_V2) peuvent être reliés l'un à l'autre de façon calée en rotation par un élément de changement de vitesse actionnable unilatéralement (E), dans laquelle le pignon fou (7) proche de cet élément de changement de vitesse (E) est monté à rotation sur l'arbre secondaire (w_HG) et peut être calé en rotation avec celui-ci, dans laquelle le pignon fou (3) éloigné de cet élément de changement de vitesse (E) est monté à rotation sur l'arbre d'entrée de boîte de vitesses intérieur (w_K1) et peut être calé en rotation avec celui-ci, et **en ce qu'**un pignon fou médian (5) est monté à rotation axialement entre les deux pignons fous précités (3, 7) et peut être relié de façon calée en rotation à l'arbre d'entrée de boîte de vitesse intérieur (w_K1), à l'arbre secondaire (w_HG) ou à ces deux arbres (w_K1, w_HG).

2. Boîte de vitesses à double embrayage selon la revendication 1, **caractérisée en ce qu'**avec cinq plans de pignons de marche avant (Z1, Z2, Z3, Z4, Z5) du groupe principal (HG) et deux étages de transmission du groupe de zone (GP), au moins onze rapports de vitesse de marche avant commutables en charge (V1, V2, V3, V4, V5, V6, V7, V8, V9, V10, V11) sont utilisables, dans laquelle au moins un rapport de marche avant (V8) est utilisable indépendamment des états d'engagement du groupe de zone (GP).

3. Boîte de vitesses à double embrayage selon la revendication 1 ou 2, **caractérisée en ce que** le premier plan de pignons de marche avant (Z1) comprend deux pignons fixes en prise (1, 2), qui forment une constante d'entrée, dans laquelle le premier pignon fixe (1) du premier plan de pignons de marche avant est relié de façon calée en rotation à l'arbre d'entrée de boîte de vitesses extérieur (w_K2) et le deuxième pignon fixe (2) du premier plan de pignons de marche avant est relié de façon calée en rotation avec l'arbre intermédiaire intérieur (w_V2), **en ce que** le deuxième plan de pignons de marche avant (Z2) comprend un pignon fou (3) et un pignon fixe (4) en prise avec celui-ci, dans laquelle le pignon fou (3) du deuxième plan de pignons de marche avant est monté à rotation sur l'arbre d'entrée de boîte de vitesses intérieur (w_K1) et peut être relié à celui-ci de façon calée en rotation par un élément de changement de vitesse (A), et le pignon fixe associé (4) du deuxième plan de pignons de marche avant est monté de façon calée en rotation sur l'arbre intermédiaire extérieur (w_V1), **en ce que** le troisième plan de pignons de marche avant (Z3) comprend un pignon fou (5) et un pignon fixe (6) en prise avec celui-ci, dans laquelle le pignon fou (5) du troisième plan de pignons de marche avant est disposé de façon calée en rotation axialement entre l'arbre d'entrée de boîte de vitesses intérieur (w_K1) et l'arbre secondaire (w_HG) et peut être relié de façon calée en rotation à l'arbre d'entrée de boîte de vitesses intérieur (w_K1) par un élément de changement de vitesse (B) et peut être relié de façon calée en rotation à l'arbre secondaire (w_HG) par un élément de changement de vitesse (C), et **en ce que** le pignon fixe associé (6) du troisième plan de pignons de marche avant est disposé de façon calée en rotation sur l'arbre intermédiaire extérieur (W_V1), **en ce que** le quatrième plan de pignons de marche avant (Z4) comprend un pignon fou (7) et un pignon fixe (8) en prise avec celui-ci, dans laquelle le pignon fou (7) du quatrième plan de pignons de marche avant est disposé de façon calée en rotation sur l'arbre secondaire (w_HG) et peut être relié à celui-ci de façon calée en rotation par un élément de changement de vitesse (D), et le pignon fixe (8) du quatrième plan de pignons de marche avant est monté de façon calée en rotation sur l'arbre intermédiaire extérieur (w_V1), et **en ce que** le cinquième plan de pignons de marche avant (Z5) comprend un pignon fou (9) et un pignon fixe (10) en prise avec celui-ci, dans laquelle le pignon fou (9) du cinquième plan de pignons de marche avant est monté de façon calée en rotation sur l'arbre secondaire (w_HG) et peut être relié à celui-ci de façon calée en rotation par un élément de changement de vitesse (G), et le pignon fixe associé (10) du cinquième plan de pignons de marche avant est disposé de façon calée en rotation sur l'arbre intermédiaire intérieur (w_V2).

4. Boîte de vitesses à double embrayage selon l'une quelconque des revendications 1 à 3, **caractérisée en ce qu'**il est prévu un étagement évolutif, qui passe lors du changement de vitesse d'un étagement des vitesses essentiellement géométrique à un étagement des vitesses essentiellement progressif.

5. Boîte de vitesses à double embrayage selon l'une quelconque des revendications 1 à 4, **caractérisée en ce que** le groupe de zone (GP) est formé par un engrenage planétaire, avec une roue solaire centrale (SR), une couronne creuse extérieure (HR) et un porte-satellites (PT), qui guide plusieurs satellites (PR) engrenant entre la roue solaire (SR) et la couronne creuse (HR), dans laquelle la roue solaire (SR) fait office de premier élément de boîte de vitesses du groupe de zone (GP), qui est relié à l'arbre secondaire (w_HG), qui fait office de premier élément de boîte de vitesses du groupe principal (HG), dans laquelle le porte-satellites (PT) fait office de deuxième élément de boîte de vitesses du groupe de zone (GP), qui est relié de façon calée en rotation à l'arbre de commande (w_ab) et qui peut être relié par un élément de changement de vitesse (H) disposé axialement entre le groupe de zone (GP) et un plan de pignons de marche avant voisin (Z5) à un pignon fou (9) du plan de pignons de marche avant (Z5) monté à rotation sur l'arbre secondaire (w_HG) et pouvant être relié à celui-ci de façon calée en rotation par un élément de changement de vitesse (G), qui fait office de deuxième élément de boîte de vitesses du groupe principal (HG), et dans laquelle la couronne creuse (HR) peut être reliée à un composant fixe (14) par un élément de changement de vitesse (I) et peut être couplée au porte-satellites (PT) par un élément de changement de vitesse (J).

6. Boîte de vitesses à double embrayage selon l'une quelconque des revendications 1 à 5, **caractérisée en ce que** le septième rapport de marche avant (V7) peut être engagé par engagement d'une liaison directe de l'arbre d'entrée de boîte de vitesses intérieur (w_K1) avec l'arbre secondaire (w_HG) et engagement d'un étage de transmission inférieur du groupe de zone (GP) comme rapport le plus élevé d'un groupe de rapports inférieur.

7. Boîte de vitesses à double embrayage selon l'une quelconque des revendications 1 à 6, **caractérisée en ce que** le onzième rapport de marche avant (V11) peut être engagé par engagement d'une liaison directe de l'arbre d'entrée de boîte de vitesses intérieur (w_K1) avec l'arbre secondaire (w_HG) et engagement d'un étage de transmission supérieur du groupe de zone (GP) comme un rapport direct.

8. Boîte de vitesses à double embrayage selon l'une quelconque des revendications 1 à 7, **caractérisée en ce que** le huitième rapport de marche avant (V8) peut être engagé par engagement d'une liaison entre le porte-satellites (PT) du groupe de zone (GP) et le pignon fou voisin (9) du cinquième plan de pignons de marche avant (Z5) indépendamment des états d'engagement du groupe de zone (GP).

9. Boîte de vitesses à double embrayage selon l'une quelconque des revendications 1 à 8, **caractérisée en ce qu'**il est prévu un plan de pignons de marche arrière (ZR), qui est disposé axialement entre le quatrième plan de pignons de marche avant (Z4) et le cinquième plan de pignons de marche avant (Z5), **en ce que** le plan de pignons de marche arrière (ZR) comprend un pignon fou (11) et un pignon fixe (12) ainsi qu'un pignon d'inversion du sens de rotation (13) monté à rotation en prise avec le pignon fou (11) et le pignon fixe (12), dans laquelle le pignon fou (11) du plan de pignons de marche arrière est monté à rotation sur l'arbre secondaire (w_HG) et peut être relié à ce dernier de façon calée en rotation par un élément de changement de vitesse (F) et le pignon fixe (12) du plan de pignons de marche arrière est disposé de façon calée en rotation sur l'arbre intermédiaire intérieur (w_V2), dans laquelle six rapports de marche arrière au moins partiellement commutables en charge sont utilisables.

10. Boîte de vitesses à double embrayage selon l'une quelconque des revendications 1 à 9, **caractérisée en ce que** dix éléments de changement de vitesse (A, B, C, D, E, F, G, H, I, J) sont disposés, dans laquelle huit éléments de changement de vitesse (A, B, C, D, E, F, G, H) sont associés au groupe principal (HG) et deux éléments de changement de vitesse (I, J) sont associés au groupe de zone (GP), dans laquelle six éléments de changement de vitesse (A, B, C, D, F, G) du groupe principal (HG) sont rassemblés dans des dispositifs de changement de vitesse (S1, S2, S3) actionnables par les deux côtés avec chaque fois deux éléments de changement de vitesse (A-B, C-D, F-G), et les deux éléments de changement de vitesse (I, J) du groupe de zone (GP) sont rassemblés dans un autre dispositif de changement de vitesse actionnable par les deux côtés (S4).
